# EUROPÄISCHE PATENTANMELDUNG

(11) **EP 2 777 888 A1**
(43) Veröffentlichungstag der Anmeldung: **17.09.2014**
(21) Anmeldenummer: 14154712.5
(22) Anmeldetag: 11.02.2014
(51) Int. Cl.: B25F 5/00, B25F 5/02

(54) **Handwerkzeuggetriebeeinheit**

(30) Priorität: 12.03.2013 DE 102013204278; 12.03.2013 DE 102013204284; 12.03.2013 DE 102013204281; 31.01.2014 DE 102014201738
(71) Anmelder: ROBERT BOSCH GMBH, 70442 Stuttgart (DE)
(72) Erfinder: Rommel, Julia, 70839 Gerlingen (DE)

(57) **Zusammenfassung**

Die Erfindung geht aus von einer Handwerkzeuggetriebeeinheit mit einem Festgehäuse (12a-c), mit einem relativ zu dem Festgehäuse (12a-c) um eine Schwenkachse (14a-c) schwenkbar gelagerten Schwenkgehäuse (16a-c), mit einem Antriebszahnrad (18a-c) und mit einem in dem Schwenkgehäuse (16a-c) gelagerten Abtriebszahnrad (20 a-c).

Es wird vorgeschlagen, dass die Handwerkzeuggetriebeeinheit eine Verbindungseinheit (22a-c) aufweist, die eine Drehbewegung von dem Antriebszahnrad (18a-c) auf das Abtriebszahnrad (20a-c) überträgt.

## Beschreibung

### Stand der Technik

Es ist bereits eine Handwerkzeuggetriebeeinheit mit einem Festgehäuse, mit einem relativ zu dem Festgehäuse um eine Schwenkachse schwenkbar gelagerten Schwenkgehäuse, mit einem Antriebszahnrad und mit einem in dem Schwenkgehäuse gelagerten Abtriebszahnrad vorgeschlagen worden.

### Offenbarung der Erfindung

Die Erfindung geht aus von einer Handwerkzeuggetriebeeinheit mit einem Festgehäuse, mit einem relativ zu dem Festgehäuse um eine Schwenkachse schwenkbar gelagerten Schwenkgehäuse, mit einem Antriebszahnrad und mit einem in dem Schwenkgehäuse gelagerten Abtriebszahnrad.

Es wird vorgeschlagen, dass die Handwerkzeuggetriebeeinheit eine Verbindungseinheit aufweist, die eine Drehbewegung von dem Antriebszahnrad auf das Abtriebszahnrad überträgt. Unter einem "Festgehäuse" soll insbesondere ein Gehäuse verstanden werden, in dem zumindest ein Antriebszahnrad der Handwerkzeuggetriebeeinheit insbesondere indirekt drehbar gelagert ist. Vorzugsweise ist das Antriebszahnrad in einem Getriebegehäuse eines Getriebes eines die erfindungsgemäße Handwerkzeuggetriebeeinheit aufweisenden Handwerkzeugs relativ zu dem Festgehäuse drehbar gelagert. Vorzugsweise ist eine Drehachse des Antriebszahnrads relativ zu dem Festgehäuse unbeweglich. Vorzugsweise ist das Festgehäuse einstückig mit einem Maschinengehäuse des die Handwerkzeuggetriebeeinheit aufweisenden Handwerkzeugs ausgebildet. Alternativ könnte das Festgehäuse dazu vorgesehen sein, mit einem Maschinengehäuse eines Handwerkzeugs von einem Bediener lösbar fest verbunden zu werden. Vorzugsweise sind das Maschinengehäuse, das Festgehäuse und insbesondere auch das Getriebegehäuse in einem betriebsbereiten Zustand relativ zu einander unbeweglich miteinander verbunden. Unter einem "Antriebszahnrad" soll insbesondere ein Zahnrad verstanden werden, das wirkungsmäßig insbesondere direkt vor einer Verbindungseinheit der Handwerkzeuggetriebeeinheit angeordnet ist, die eine Drehbewegung von dem Antriebszahnrad auf das Abtriebszahnrad überträgt. Vorzugsweise ist das Antriebszahnrad in einem betriebsbereiten Zustand wirkungsmäßig zwischen einem Getriebe des Handwerkzeugs und der Verbindungseinheit angeordnet. Das Getriebe der Antriebseinheit reduziert in zumindest einem Betriebszustand eine Drehzahl eines Motors der Antriebseinheit insbesondere im Wesentlichen auf eine Drehzahl einer Einsatzwerkzeugbefestigung der Handwerkzeuggetriebeeinheit. Alternativ oder zusätzlich könnte das Antriebszahnrad in einem betriebsbereiten Zustand drehfest mit einer Einsatzwerkzeugbefestigung des mit der Handwerkzeuggetriebeeinheit gekoppelten Handwerkzeugs verbunden sein. Unter der Wendung "schwenkbar gelagert" soll insbesondere verstanden werden, dass das Schwenkgehäuse relativ zu dem Festgehäuse von dem Bediener um wenigstens 90 Grad, vorteilhaft um wenigstens 180 Grad, besonders vorteilhaft um wenigstens 270 Grad, drehbar befestigt ist. Insbesondere ist das Schwenkgehäuse relativ zu dem Festgehäuse um nicht mehr als 360 Grad drehbar. Unter einem "Schwenkgehäuse" soll insbesondere ein Gehäuseteil der Handwerkzeuggetriebeeinheit verstanden werden, das in einem betriebsbereiten Zustand relativ zu dem Festgehäuse der Handwerkzeuggetriebeeinheit schwenkbar gelagert ist. Vorzugsweise ist das Schwenkgehäuse relativ zu einem Handgriff des die Handwerkzeuggetriebeeinheit aufweisenden Handwerkzeugs schwenkbar gelagert. Vorzugsweise ist die Einsatzwerkzeugbefestigung drehbar in dem Schwenkgehäuse gelagert. Vorzugsweise ist/sind eine Drehachse des Abtriebszahnrads und/oder eine Drehachse der Einsatzwerkzeugbefestigung relativ zu dem Schwenkgehäuse unbeweglich. Unter einem "Abtriebszahnrad" soll insbesondere ein Zahnrad verstanden werden, das wirkungsmäßig insbesondere direkt hinter der Verbindungseinheit angeordnet ist. Vorzugsweise ist das Abtriebszahnrad wirkungsmäßig zwischen der Verbindungseinheit und der Einsatzwerkzeugbefestigung angeordnet. Vorteilhaft ist das Abtriebszahnrad in einem betriebsbereiten Zustand drehfest mit der Einsatzwerkzeugbefestigung verbunden. Unter einer "Verbindungseinheit" soll insbesondere eine Einheit verstanden werden, die das Antriebszahnrad und das Abtriebszahnrad wirkungsmäßig direkt verbindet. Vorzugsweise sind alle Teile der Verbindungseinheit drehfest miteinander verbunden. Alternativ könnte die Verbindungseinheit zwei oder insbesondere drei miteinander in Eingriff stehende Zahnräder aufweisen. Vorteilhaft ist eine Drehachse der Verbindungseinheit senkrecht zu der Drehachse des Abtriebszahnrads und/oder der Drehachse des Antriebszahnrads ausgerichtet. Durch die erfindungsgemäße Ausgestaltung der Handwerkzeuggetriebeeinheit kann konstruktiv einfach ein Handwerkzeug bereitgestellt werden, mit dem ein besonders komfortables Arbeiten, insbesondere auch in Ecken, möglich ist.

Ferner wird vorgeschlagen, dass die Handwerkzeuggetriebeeinheit zumindest eine Lagereinheit umfasst, die dazu vorgesehen ist, die Verbindungseinheit auf zumindest einer Seite nur in dem Schwenkgehäuse drehbar zu lagern, wodurch eine besonders exakte Anordnung des Abtriebszahnrads relativ zu der Verbindungseinheit in verschiedenen Betriebszuständen möglich ist. Unter einer "Lagereinheit" soll insbesondere eine Einheit verstanden werden, die dazu vorgesehen ist, die Verbindungseinheit zumindest in eine Richtung senkrecht zu der Drehachse der Verbindungseinheit drehbar zu befestigen. Die Lagereinheit umfasst zumindest ein, dem Fachmann als sinnvoll erscheinendes Lagermittel, vorzugsweise jedoch ein Kugellager, ein Wälzlager und/oder besonders bevorzugt ein Gleitlager. Vorteilhaft umfasst die Lagereinheit zumindest zwei voneinander beabstandete Lagermittel. Die Lagereinheit könnte zumindest teilweise einstückig mit dem Schwenkgehäuse ausgebildet und/oder in das Schwenkgehäuse integriert sein. Unter der Wendung "auf zumindest einer Seite" soll insbesondere verstanden werden, dass die Verbindungseinheit zumindest in einem Bereich, der wenigstens durch eine Ebene, die durch einen Mittelpunkt der Verbindungseinheit verläuft und senkrecht zu einer Haupterstreckung der Verbindungseinheit ausgerichtet ist, von einem eine andere Seite bildenden Bereich abgetrennt ist, eine Lagerkraft nur über das Schwenkgehäuse direkt ableitet. Vorzugsweise ist die Verbindungseinheit auf beiden Seiten nur in dem Schwenkgehäuse gelagert. Alternativ könnte die Verbindungseinheit lediglich auf einer Seite nur in dem Schwenkgehäuse gelagert sein. Unter "nur" soll insbesondere verstanden werden, dass die Lagereinheit alle von der Verbindungseinheit auf die Lagermittel übertragenen Kräfte an dem Schwenkgehäuse abstützt. Insbesondere überträgt die Lagereinheit keine Kräfte von dem Schwenkgehäuse auf das Festgehäuse. Insbesondere weist die Handwerkzeuggetriebeeinheit keine Lagermittel auf, die die Verbindungseinheit direkt in dem Festgehäuse lagern. Insbesondere soll unter "vorgesehen" speziell ausgelegt und/oder ausgestattet verstanden werden. Unter der Wendung "in dem Schwenkgehäuse lagern" soll insbesondere verstanden werden, dass die Lagereinheit eine Lagerkraft insbesondere direkt auf das Schwenkgehäuse überträgt. Insbesondere überträgt das Schwenkgehäuse die Lagerkräfte der Lagereinheit zumindest teilweise von der Lagereinheit auf das Festgehäuse.

In einer weiteren Ausgestaltung wird vorgeschlagen, dass das Schwenkgehäuse dazu vorgesehen ist, die Verbindungseinheit und das Abtriebszahnrad zu einer vormontierbaren Baugruppe zu verbinden, wodurch eine vorteilhafte Herstellung möglich ist. Unter einer "vormontierbaren Baugruppe" soll insbesondere verstanden werden, dass das Schwenkgehäuse, die Verbindungseinheit, das Abtriebszahnrad, vorteilhaft die Einsatzwerkzeugbefestigung und bevorzugt die Lagereinheit, von dem Festgehäuse getrennt in sich stabil miteinander verbindbar ausgebildet sind. Vorzugsweise sind Gehäuseteile des Schwenkgehäuses dazu vorgesehen, aneinander befestigt zu werden und in diesem Zustand die Verbindungseinheit, das Abtriebszahnrad, vorteilhaft die Einsatzwerkzeugbefestigung und bevorzugt die Lagereinheit zu befestigen.

Des Weiteren wird vorgeschlagen, dass das Schwenkgehäuse um eine Schwenkachse schwenkbar vorteilhaft direkt in dem Festgehäuse gelagert ist, wodurch eine einfache Konstruktion erreicht werden kann.

Ferner wird vorgeschlagen, dass das Schwenkgehäuse zumindest eine Lagerfläche zu der Lagerung in dem Festgehäuse aufweist, wodurch eine besonders preiswerte Herstellung und eine kompakte Ausführung möglich sind. Alternativ könnte die Handwerkzeuggetriebeeinheit ein Lagermittel aufweisen, das das Schwenkgehäuse schwenkbar direkt in dem Festgehäuse lagert. Unter einer "Lagerfläche" soll insbesondere eine Fläche verstanden werden, die in zumindest einem Betriebszustand eine Lagerkraft vorteilhaft direkt auf das Festgehäuse überträgt. Vorteilhaft weist das Schwenkgehäuse zwei von einander beabstandete Lagerflächen zu der Lagerung in dem Festgehäuse auf. Vorzugsweise ist die Lagerfläche als eine Mantelfläche des Schwenkgehäuses, insbesondere einer Anformung des Schwenkgehäuses, ausgebildet. Vorteilhaft ist die Anformung zumindest im Wesentlichen zylinderförmig und/oder kegelförmig ausgebildet. Insbesondere weist das Festgehäuse eine zu der Lagerfläche korrespondierende Lagerfläche auf. Bevorzugt weist das Festgehäuse eine zu der Anformung des Schwenkgehäuses korrespondierende Aussparung auf. Alternativ oder zusätzlich könnten das Festgehäuse eine Anformung und das Schwenkgehäuse eine Aussparung aufweisen. Zusätzlich könnte das Festgehäuse zwei Befestigungsmittel aufweisen, die jeweils dazu vorgesehen sind, zumindest eine Kraft in zwei gegensätzliche Richtungen parallel zu der Schwenkachse auf das Schwenkgehäuse zu bewirken.

Ferner wird vorgeschlagen, dass die Lagereinheit zwei Lagermittel aufweist, die die Verbindungseinheit an zwei entlang der Schwenkachse einander gegenüberliegenden Seiten in dem Schwenkgehäuse drehbar lagern, wodurch eine besonders stabile Lagerung erreicht werden kann. Insbesondere lagern die Lagermittel die Verbindungseinheit direkt in dem Schwenkgehäuse. Unter einem "Lagermittel" soll ein, dem Fachmann als sinnvoll erscheinendes Lager, vorzugweise jedoch ein Gleitlager, ein Kugellager und/oder ein Nadellager, verstanden werden. Unter "entlang der Schwenkachse einander gegenüberliegenden Seiten" soll in diesem Zusammenhang insbesondere verstanden werden, dass die Lagermittel dazu vorgesehen sind, eine Lagerkraft auf das Schwenkgehäuse und/oder auf die Verbindungseinheit in zwei verschiedenen Bereichen zu bewirken, die in einer Richtung parallel zu der Schwenkachse von einander beabstandet sind, und zwar um mehr als 5 mm, vorteilhaft um mehr als 10 mm, besonders vorteilhaft um mehr als 20 mm.

Des Weiteren wird vorgeschlagen, dass die Lagereinheit zwei Lagermittel aufweist, die die Verbindungseinheit an einer ersten Seite in dem Schwenkgehäuse und an einer der ersten Seite gegenüberliegenden zweiten Seite in dem Festgehäuse drehbar lagern, wodurch eine besonders kompakte Ausführung konstruktiv einfach möglich ist.

Weiterhin wird vorgeschlagen, dass die Handwerkzeuggetriebeeinheit eine Arretierungseinheit mit einem Arretierungselement umfasst, das dazu vorgesehen ist, das Schwenkgehäuse relativ zu dem Antriebszahnrad in zumindest einer Stellung zu arretieren, wodurch konstruktiv einfach ein Handwerkzeug bereitgestellt werden kann, mit dem ein komfortables Arbeiten möglich ist. Insbesondere kann ein versehentliches Verstellen einer Stellung des Schwenkgehäuses vermieden werden. Unter einem "Arretierungselement" soll insbesondere ein Element verstanden werden, das in zumindest einem Betriebszustand eine Kraft auf das Schwenkgehäuse bewirkt, die eine Schwenkbewegung des Schwenkgehäuses um die vorgesehene Schwenkachse verhindert. Vorteilhaft ist das Arretierungselement drehfest in dem Festgehäuse gelagert. Vorzugsweise weist die Arretierungseinheit ein Bedienelement auf, das dazu vorgesehen ist, bei einer Betätigung durch den Bediener die Arretierung zu schließen und/oder zu lösen. Unter einer "Stellung" soll in diesem Zusammenhang insbesondere eine Ausrichtung des Schwenkgehäuses relativ zu dem Festgehäuse verstanden werden. Insbesondere soll unter dem Begriff "arretieren" in einer Stellung um die vorgesehene Schwenkachse befestigen verstanden werden.

In einer weiteren Ausgestaltung wird vorgeschlagen, dass die Arretierungseinheit dazu vorgesehen ist, das Schwenkgehäuse in mehreren Stellungen zu arretieren, wodurch das besonders komfortable Arbeiten in verschiedenen Arbeitssituationen erreicht werden kann. Vorzugsweise verrastet die Arretierungseinheit das Schwenkgehäuse in den Stellungen selbstständig. Unter "mehreren Stellungen" sollen insbesondere mehrere verschiedene Ausrichtungen des Schwenkgehäuses relativ zu dem Festgehäuse verstanden werden. Alternativ könnte die Arretierungseinheit dazu vorgesehen sein, das Schwenkgehäuse in genau einer Stellung zu arretieren, bei der die Drehachse des Antriebszahnrads vorzugsweise parallel zu der Drehachse des Abtriebszahnrads ausgerichtet ist.

Des Weiteren wird vorgeschlagen, dass die Stellungen regelmäßig um die Schwenkachse angeordnet sind, wodurch eine vorteilhaft intuitive Einstellung einer gewünschten Stellung besonders einfach möglich ist. Insbesondere soll unter dem Begriff "regelmäßig" verstanden werden, dass zumindest zwei der Stellungen einen zu einer dritten der Stellungen gleichen Winkel aufweisen. Vorzugsweise sind die Stellungen symmetrisch zu der Drehachse des Antriebszahnrads ausgerichtet. Besonders bevorzugt sind die Stellungen von einer benachbarten Stellung um jeweils 90 Grad, vorteilhaft um 45 Grad, besonders vorteilhaft jeweils um 22,5 Grad, verschieden. Vorteilhaft gibt die Arretierungseinheit dem Bediener eine Ausrichtung des Schwenkgehäuses in einer der Stellungen insbesondere optisch und/oder vorteilhaft haptisch aus.

Ferner wird vorgeschlagen, dass das Arretierungselement in zumindest einem Betriebszustand einen Formschluss mit dem Schwenkgehäuse herstellt, wodurch konstruktiv einfach eine besonders stabile Arretierung möglich ist. Unter einem "Formschluss" soll insbesondere verstanden werden, dass aneinanderliegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Vorzugsweise ist das Arretierungselement fest mit dem Festgehäuse verbunden. Alternativ könnte das Arretierungselement fest mit dem Schwenkgehäuse verbunden sein und in zumindest einem Betriebszustand einen Formschluss mit dem Festgehäuse herstellen. Alternativ oder zusätzlich zu dem Formschluss könnte das Arretierungselement in zumindest einem Betriebszustand einen Reibschluss herstellen.

Zudem wird vorgeschlagen, dass die Arretierungseinheit eine Arretierungsfeder aufweist, die in zumindest einem Betriebszustand auf das Arretierungselement drückt, wodurch eine besonders komfortable und sichere Benutzung erreicht werden kann. Unter einer "Arretierungsfeder" soll insbesondere eine Feder verstanden werden, die in zumindest einem Betriebszustand das Arretierungselement in eine Arretierungsstellung verschiebt. Vorzugsweise muss der Bediener das Arretierungselement zur Lösung der Arretierung gegen eine Federkraft der Arretierungsfeder verschieben.

Weiterhin wird vorgeschlagen, dass das Arretierungselement im Wesentlichen senkrecht zu der Schwenkachse verschiebbar gelagert ist, wodurch das Arretierungselement konstruktiv einfach in Richtung eines Handgriffs angeordnet werden kann. Insbesondere soll unter der Wendung "im Wesentlichen" in Bezug auf eine Richtung verstanden werden, dass die Richtung um weniger als 30 Grad, vorteilhaft um weniger als 15 Grad, besonders vorteilhaft um weniger als 5 Grad, von der angegebenen Richtung abweicht. Vorzugsweise ist das Arretierungselement zumindest im Wesentlichen translatorisch bewegbar befestigt. Alternativ könnte das Arretierungselement schwenkbar befestigt sein und insbesondere einen Exzenter und/oder ein Gewinde aufweisen.

Des Weiteren wird vorgeschlagen, dass die Handwerkzeuggetriebeeinheit ein Festgehäuse aufweist, das eine zumindest im Wesentlichen parallel zu der Drehachse des Abtriebszahnrads ausgerichtete Außenseite umfasst, die von der Drehachse des Abtriebszahnrads weniger als 12 mm, vorteilhaft weniger als 8 mm, besonders vorteilhaft weniger als 6 mm, beabstandet ist, wodurch ein Schrauben an besonders schwer erreichbaren Orten möglich ist. Unter der Wendung "entlang der Schwenkachse des Schwenkgehäuses" soll insbesondere auf einer parallel zu der Schwenkachse des Schwenkgehäuses ausgerichteten Geraden verstanden werden. Unter "zumindest im Wesentlichen parallel" soll in diesem Zusammenhang insbesondere verstanden werden, dass sich eine Ausrichtung der Außenseite des Festgehäuses und eine Ausrichtung der Drehachse des Abtriebszahnrads um weniger als 15 Grad unterscheiden.

Ferner wird vorgeschlagen, dass das Arretierungselement auf einer der ersten Seite gegenüberliegenden zweiten Seite angeordnet ist, wodurch ein geringer Bauraumbedarf auf der ersten Seite erreicht werden kann.

In einer vorteilhaften Ausbildung der Erfindung wird vorgeschlagen, dass das Arretierungselement im Wesentlichen parallel zu der Schwenkachse verschiebbar gelagert ist, wodurch eine besonders kompakte Konstruktion möglich ist.

Des Weiteren wird vorgeschlagen, dass die Handwerkzeuggetriebeeinheit zwei Befestigungsmittel aufweist, die dazu vorgesehen sind, das Schwenkgehäuse an zwei entlang der Schwenkachse einander gegenüberliegenden Seiten schwenkbar zu befestigen, wodurch eine große Stabilität erreicht werden kann. Insbesondere soll unter einem "Befestigungsmittel" insbesondere ein Mittel verstanden werden, welches das Schwenkgehäuse direkt an dem Festgehäuse befestigt. Vorzugsweise weisen das Schwenkgehäuse und das Festgehäuse jeweils zwei Befestigungsmittel auf. Insbesondere sind die Befestigungsmittel des Schwenkgehäuses voneinander räumlich getrennt ausgebildet. Insbesondere sind die Befestigungsmittel des Festgehäuses voneinander räumlich getrennt ausgebildet. Vorteilhaft korrespondieren die Befestigungsmittel des Schwenkgehäuses mit jeweils einem Befestigungsmittel des Festgehäuses. Unter "entlang der Schwenkachse einander gegenüberliegenden Seiten" soll insbesondere verstanden werden, dass die Befestigungsmittel in zwei verschiedenen Bereichen angeordnet sind, die in einer Richtung parallel zu der Schwenkachse von einander beabstandet sind, und zwar vorteilhaft um mehr als 5 mm, besonders vorteilhaft um mehr als 10 mm. Bevorzugt umschließen die Befestigungsmittel die Schwenkachse jeweils auf einer Ebene, die senkrecht zu der Schwenkachse ausgerichtet ist. Vorzugsweise sind die Befestigungsmittel zumindest teilweise einstückig mit den Lagermitteln ausgebildet, die die Verbindungseinheit an einer ersten Seite in dem Schwenkgehäuse und an einer der ersten Seite gegenüberliegenden zweiten Seite in dem Festgehäuse drehbar lagern.

Außerdem wird vorgeschlagen, dass die Befestigungsmittel jeweils dazu vorgesehen sind, Kräfte zumindest in zwei gegensätzliche Richtungen parallel zu der Schwenkachse auf das Schwenkgehäuse zu bewirken, wodurch eine besonders große Stabilität erreicht werden kann. Insbesondere wird vermieden, dass sich die Befestigungsmittel des Festgehäuses durch einen Druck auf die Einsatzwerkzeugbefestigung nach innen und/oder außen biegen. Unter "jeweils" soll in diesem Zusammenhang insbesondere verstanden werden, dass eines der zwei Befestigungsmittel des Schwenkgehäuses im Zusammenwirken mit einem der zwei Befestigungsmittel des Festgehäuses dazu vorgesehen ist, eine Schwenkverbindung herzustellen, über die eine Kraft in zwei entgegengesetzte axiale Richtungen übertragbar ist. Durch die erfindungsgemäße Ausgestaltung der Handwerkzeuggetriebeeinheit kann eine besonders große Stabilität erreicht werden. Insbesondere wird vermieden, dass sich die Befestigungsmittel des Festgehäuses durch einen Druck auf die Einsatzwerkzeugbefestigung nach innen und/oder außen biegen.

In einer weiteren Ausgestaltung wird vorgeschlagen, dass die Befestigungsmittel das Schwenkgehäuse jeweils formschlüssig parallel zu der Schwenkachse befestigen, wodurch konstruktiv einfach eine besonders stabile Befestigung möglich ist. Unter "formschlüssig" soll insbesondere verstanden werden, dass aneinander anliegende Flächen der miteinander parallel zu der Schwenkachse formschlüssig verbundenen Befestigungsmittel eine in Normalenrichtung der Flächen wirkende Haltekraft aufeinander ausüben. Insbesondere befindet sich jeweils ein Befestigungsmittel des Schwenkgehäuses in einem geometrischen Eingriff mit einem Befestigungsmittel des Festgehäuses.

Des Weiteren wird vorgeschlagen, dass die Befestigungsmittel als Teil einer Nut-Feder-Verbindung ausgebildet sind, wodurch eine besonders einfache Montage möglich ist. Unter einer "Nut-Feder-Verbindung" soll insbesondere eine Verbindung verstanden werden, bei der ein Bereich eines Befestigungsmittels auf einer parallel zu der Schwenkachse ausgerichteten Geraden zwischen zwei Bereichen eines korrespondierenden Befestigungsmittels angeordnet ist.

Zudem wird vorgeschlagen, dass das Antriebszahnrad eine von einer Drehachse des Abtriebszahnrads radial beabstandete Drehachse aufweist, wodurch eine Drehachse konstruktiv einfach vorteilhaft positioniert werden kann. Insbesondere soll unter "radial beabstandet" verstanden werden, dass die Drehachse des Antriebszahnrads und die Drehachse des Abtriebszahnrads in einer Richtung senkrecht zu zumindest einer der Drehachsen einen Abstand aufweisen. Vorzugsweise weisen die Drehachse des Antriebszahnrads und die Drehachse des Abtriebszahnrads entlang einer Drehachse der Verbindungseinheit einen Abstand größer als 2 mm, vorteilhaft größer als 4 mm, besonders vorteilhaft größer als 8 mm, auf. Bevorzugt weisen die Drehachse des Antriebszahnrads und die Drehachse des Abtriebszahnrads entlang der Drehachse der Verbindungseinheit einen Abstand kleiner als 40 mm, vorteilhaft kleiner als 30 mm, besonders vorteilhaft kleiner als 20 mm, auf. Vorzugsweise sind die Drehachse des Antriebszahnrads und die Drehachse des Abtriebszahnrads parallel ausrichtbar.

In einer weiteren Ausgestaltung wird vorgeschlagen, dass die Verbindungseinheit dazu vorgesehen ist, eine Drehbewegung von dem Antriebszahnrad auf das

Abtriebszahnrad zumindest im Wesentlichen übersetzungsfrei zu übertragen, wodurch eine einfache Konstruktion möglich ist. Des Weiteren ist ein Betrieb eines Handwerkzeugs mit einer abnehmbaren Handwerkzeuggetriebeeinheit vorteilhaft möglich. Unter der Wendung "im Wesentlichen übersetzungsfrei" soll insbesondere verstanden werden, dass zumindest ein Übersetzungsverhältnis zwischen dem Antriebszahnrad und dem Abtriebszahnrad zwischen 10 und 1, vorteilhaft zwischen 5 und 1, besonders vorteilhaft zwischen 2 und 1, beträgt. Vorzugsweise weisen das Antriebszahnrad und das Abtriebszahnrad bei einem Betrieb eine gleiche Drehzahl auf. Bevorzugt weisen das Antriebszahnrad und das Abtriebszahnrad bei einem Betrieb einen gleichen Drehsinn auf, das heißt, sie drehen sich in Bezug auf eine wirkungsmäßige Richtung in eine gleiche Richtung.

Des Weiteren wird vorgeschlagen, dass die Verbindungseinheit zwei voneinander getrennt angeordnete Zahnräder aufweist, wodurch konstruktiv einfach die Drehachse des Antriebszahnrads von der Drehachse des Abtriebszahnrads beabstandet sein kann. Unter der Wendung "zwei voneinander getrennt angeordnete Zahnräder aufweisen" soll insbesondere verstanden werden, dass die Verbindungseinheit ein erstes Zahnrad aufweist, das mit dem Antriebszahnrad kämmt, und ein von dem ersten Zahnrad verschiedenes zweites Zahnrad aufweist, das mit dem Abtriebszahnrad kämmt.

Des Weiteren wird vorgeschlagen, dass die Handwerkzeuggetriebeeinheit einen Gelenkverschluss aufweist, der dazu vorgesehen ist, einen Schwenkbereich zumindest teilweise zu verschließen. wodurch ein Eindringen von Schmutz und Feuchtigkeit in das Schwenkgehäuse der Handwerkzeuggetriebeeinheit vorteilhaft reduziert werden kann. Unter einem "Schwenkbereich" soll insbesondere ein Bereich verstanden werden, durch den zumindest eine Abtriebswelle, die Einsatzwerkzeugbefestigung und/oder ein in der Einsatzwerkzeugbefestigung befestigtes Einsatzwerkzeug aus einem Schwenkgehäuse der Handwerkzeuggetriebeeinheit bei zumindest einer der mehreren möglichen Stellungen um die Schwenkachse austritt. Insbesondere soll unter der Wendung "zumindest teilweise verschließen" verstanden werden, dass der Gelenkverschluss einen von der Abtriebswelle und/oder die Einsatzwerkzeugbefestigung einen von der Abtriebswelle, der Einsatzwerkzeugbefestigung und/oder dem in der Einsatzwerkzeugbefestigung befestigten Einsatzwerkzeug unabgedeckten Teil des Schwenkbereichs zu mehr als 50 %, vorteilhaft zu mehr als 75 %, besonders vorteilhaft zu mehr als 90 %, abdeckt. Bevorzugt verschließt der Gelenkverschluss den Schwenkbereich in jedem betriebsbereiten Zustand vollständig.

Ferner wird vorgeschlagen, dass der Gelenkverschluss die Schwenkachse auf zumindest einer Ebene umschließt, wodurch konstruktiv einfach ein besonders effizienter Schutz erreicht werden kann. Unter "umschließt" soll in diesem Zusammenhang insbesondere verstanden werden, dass der Gelenkverschluss die Schwenkachse um mehr als 180 Grad, vorteilhaft mehr als 270 Grad, besonders vorteilhaft um 360 Grad, umgibt.

Des Weiteren geht die Erfindung aus von einem Handwerkzeug mit einer erfindungsgemäßen Handwerkzeuggetriebeeinheit. Unter einem "Handwerkzeug" soll insbesondere eine werkstückbearbeitende Maschine, vorteilhaft jedoch eine Bohrmaschine, ein Bohr- und/oder Schlaghammer, eine Säge, ein Hobel, eine Fräse, ein Schleifer, ein Winkelschleifer, ein Gartengerät, ein Multifunktionswerkzeug und/oder vorteilhaft ein Schrauber, verstanden werden.

Die erfindungsgemäße Handwerkzeuggetriebeeinheit soll hierbei nicht auf die oben beschriebene Anwendung und Ausführungsform beschränkt sein. Insbesondere kann die erfindungsgemäße Handwerkzeuggetriebeeinheit zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht eines Handwerkzeugs mit einer erfindungsgemäßen Handwerkzeuggetriebeeinheit, die eine Arretierungseinheit aufweist,
- Fig. 2: eine Seitenansicht der Handwerkzeuggetriebeeinheit aus Figur 1 mit einem geöffneten Festgehäuse und einem geschlossenen Schwenkgehäuse,
- Fig. 3: eine teilweise geschnittene Seitenansicht der Handwerkzeuggetriebeeinheit aus Figur 1 mit dem geöffneten Festgehäuse und einem geöffneten Schwenkgehäuse.,
- Fig. 4: die Handwerkzeuggetriebeeinheit aus Figur 1 in einer Schnittdarstellung,
- Fig. 5: eine Draufsicht im Wesentlichen der Arretierungseinheit der Handwerkzeuggetriebeeinheit aus Figur 1 in einem arretierten Betriebszustand,
- Fig. 6: eine Draufsicht im Wesentlichen der Arretierungseinheit der Handwerkzeuggetriebeeinheit aus Figur 1 in einem entarretierten Betriebszustand,
- Fig. 7: eine Seitenansicht eines Handwerkzeugs mit einem alternativen Ausführungsbeispiel zu der Handwerkzeuggetriebeeinheit aus Figur 1,
- Fig. 8: einen Schnitt der Handwerkzeuggetriebeeinheit aus Figur 7,
- Fig. 9: die Handwerkzeuggetriebeeinheit aus Figur 7 in einer perspektivischen Darstellung mit geöffnetem Festgehäuse,
- Fig. 10: ein weiteres alternatives Ausführungsbeispiel zu der Handwerkzeuggetriebeeinheit aus Figur 1 in einer Schnittdarstellung und
- Fig. 11: die Handwerkzeuggetriebeeinheit aus Figur 10 in einer Seitenansicht.

### Beschreibung der Ausführungsbeispiele

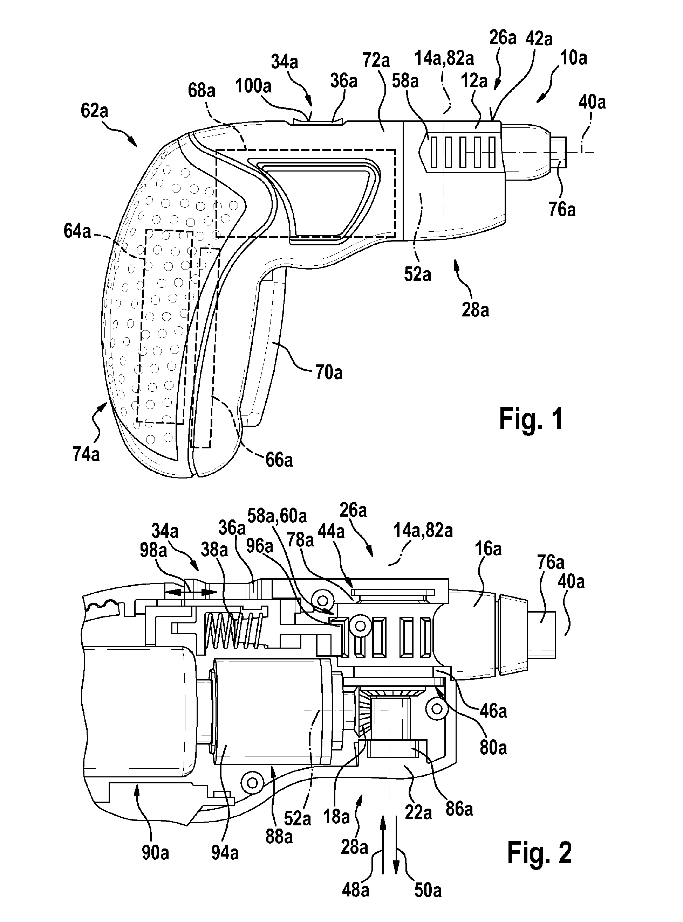

Figur 1 zeigt ein Handwerkzeug 62a mit einer erfindungsgemäßen Handwerkzeuggetriebeeinheit 10a, einem Akku 64a, einer Elektronik 66a, einer Antriebseinheit 68a, einer Bedieneinheit 70a und einem Maschinengehäuse 72a. Die Elektronik 66a ist dazu vorgesehen, die Antriebseinheit 68a aus dem Akku 64a mit elektrischer Energie zu versorgen. Mittels der Bedieneinheit 70a ist eine Drehzahl der Antriebseinheit 68a von einem Bediener steuerbar. Das Maschinengehäuse 72a ist pistolenförmig ausgebildet. Es weist eine Gesamtlänge von weniger als 140 mm auf. Das Maschinengehäuse 72a befestigt zumindest den Akku 64a, die Elektronik 66a und die Antriebseinheit 68a. Das Maschinengehäuse 72a ist zweischalig ausgebildet. Das Maschinengehäuse 72a weist einen Haupthandgriff 74a auf.

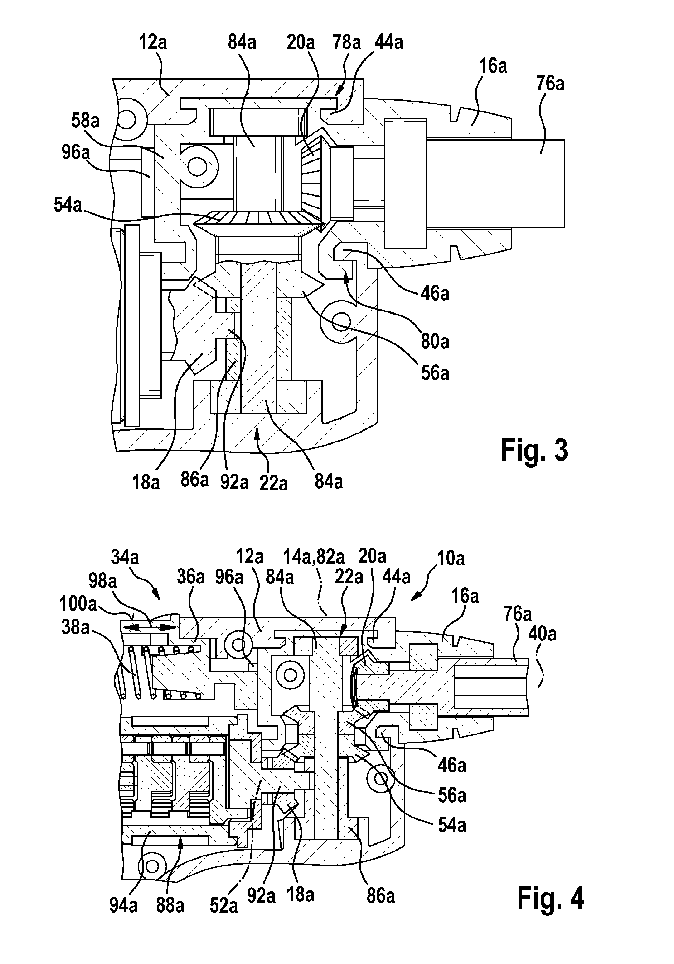

Wie insbesondere die Figuren 2 bis 4 zeigen, weist die Handwerkzeuggetriebeeinheit 10a zumindest ein Festgehäuse 12a, ein Schwenkgehäuse 16a, ein Antriebszahnrad 18a, ein Abtriebszahnrad 20a, eine Verbindungseinheit 22a und eine Einsatzwerkzeugbefestigung 76a auf. Die Einsatzwerkzeugbefestigung 76a ist dazu vorgesehen, ein nicht näher dargestelltes Einsatzwerkzeug von einem Bediener werkzeuglos wechselbar zu befestigen. Die gezeigte Einsatzwerkzeugbefestigung 76a ist dazu vorgesehen, ein Bit zu befestigen. Die Einsatzwerkzeugbefestigung 76a ist drehfest mit dem Abtriebszahnrad 20a verbunden. Das Abtriebszahnrad 20a ist auf eine Welle aufgepresst. Die Welle ist einstückig mit der Einsatzwerkzeugbefestigung 76a ausgebildet, könnte aber auch drehfest mit der Einsatzwerkzeugbefestigung 76a verbunden sein. Die Einsatzwerkzeugbefestigung 76a und das Abtriebszahnrad 20a sind drehbar in dem Schwenkgehäuse 16a gelagert. Eine Drehachse 40a des Abtriebszahnrads 20a ist relativ zu dem Schwenkgehäuse 16a unbewegt.

Das Schwenkgehäuse 16a ist um eine Schwenkachse 14a schwenkbar in dem Festgehäuse 12a gelagert. Das Festgehäuse 12a ist einstückig mit dem Maschinengehäuse 72a ausgebildet. Das Festgehäuse 12a weist zwei Befestigungsmittel 44a, 46a auf, die dazu vorgesehen sind, das Schwenkgehäuse 16a an zwei entlang der Schwenkachse 14a einander gegenüberliegenden Seiten 26a, 28a schwenkbar zu befestigen. Die Befestigungsmittel 44a, 46a sind jeweils dazu vorgesehen, Kräfte zumindest in zwei gegensätzliche Richtungen 48a, 50a parallel zu der Schwenkachse 14a auf das Schwenkgehäuse 16a zu bewirken.

Ein erstes der Befestigungsmittel 44a des Festgehäuses 12a ist als eine kreisförmige Nut ausgebildet. Das Schwenkgehäuse 16a weist ein erstes Befestigungsmittel 78a auf, das als eine kreisförmige Feder ausgebildet ist. Das erste Befestigungsmittel 78a des Schwenkgehäuses 16a ist dazu vorgesehen, in das erste Befestigungsmittel 44a des Festgehäuses 12a zu greifen. Das erste Befestigungsmittel 44a des Festgehäuses 12a und das erste Befestigungsmittel 78a des Schwenkgehäuses 16a sind an einer dem Antriebszahnrad 18a abgewandten Seite der Verbindungseinheit 22a angeordnet. Das erste Befestigungsmittel 44a des Festgehäuses 12a befestigt das erste Befestigungsmittel 78a des Schwenkgehäuses 16a, wenn das zweischalige Festgehäuse 12a geschlossen ist.

Ein zweites der Befestigungsmittel 46a des Festgehäuses 12a ist als eine kreisförmige Feder ausgebildet. Das Schwenkgehäuse 16a weist ein zweites Befestigungsmittel 80a auf, das als eine kreisförmige Nut ausgebildet ist. Das zweite Befestigungsmittel 46a des Festgehäuses 12a ist dazu vorgesehen, in das zweite Befestigungsmittel 80a des Schwenkgehäuses 16a zu greifen. Das zweite Befestigungsmittel 46a des Festgehäuses 12a und das zweite Befestigungsmittel 80a des Schwenkgehäuses 16a sind auf einer Ebene angeordnet, die zwischen der Drehachse 40a des Abtriebszahnrads 20a und einer Drehachse 52a des Antriebszahnrads 18a parallel zu zumindest einer dieser Drehachsen 40a, 52a verläuft. Die Ebene schneidet weder das Antriebszahnrad 18a noch das Abtriebszahnrad 20a. Die Befestigungsmittel 44a, 46a, 78a, 80a umschließen die Schwenkachse 14a ringförmig auf einer Ebene, die senkrecht zu der Schwenkachse 14a ausgerichtet ist.

Die Drehachse 40a des Abtriebszahnrads 20a und eine Außenseite 42a des Festgehäuses 12a, die zu der Drehachse 40a des Abtriebszahnrads 20a parallel ausgerichtet ist, sind weniger als 12 mm von einander beabstandet. Das Festgehäuse 12a überragt das Schwenkgehäuse 16a entlang der Schwenkachse 14a auf einer ersten der Seiten 26a um weniger als 12 mm. Die erste Seite 26a ist dem Haupthandgriff 74a des Maschinengehäuses 72a abgewandt. Die zweite Seite 28a ist dem Haupthandgriff 74a des Maschinengehäuses 72a zugewandt. Die Verbindungseinheit 22a ist dazu vorgesehen, eine Drehbewegung von dem Antriebszahnrad 18a auf das Abtriebszahnrad 20a zu übertragen. Eine Drehachse 82a der Verbindungseinheit 22a ist senkrecht zu der Drehachse 40a des Abtriebszahnrads 20a ausgerichtet. Des Weiteren ist die Drehachse 82a der Verbindungseinheit 22a senkrecht zu der Drehachse 52a des Antriebszahnrads 18a ausgerichtet.

Die Verbindungseinheit 22a umfasst eine Achse 84a, ein erstes Zahnrad 54a und ein zweites Zahnrad 56a. Die Zahnräder 54a, 56a sind auf die Achse 84a aufgepresst. Die Achse 84a ist auf der ersten Seite 26a in dem Schwenkgehäuse 16 gelagert. Die Achse 84a ist auf der zweiten Seite 28a, die von der ersten Seite 26a beabstandet ist, in dem Festgehäuse 12a gelagert. Dazu weist die Handwerkzeuggetriebeeinheit 10a eine Lagerbuchse 86a auf. Die Lagerbuchse 86a ist dazu vorgesehen, eine Befestigungskraft auf das erste Zahnrad 54a zu bewirken.

Das erste Zahnrad 54a kämmt mit dem Antriebszahnrad 18a. Das zweite Zahnrad 56a kämmt mit dem Abtriebszahnrad 20a. Das erste Zahnrad 54a ist drehfest mit dem zweiten Zahnrad 56a verbunden. Das Antriebszahnrad 18a, das Abtriebszahnrad 20a, das erste Zahnrad 54a und das zweite Zahnrad 56a sind als Kegelzahnräder ausgebildet. Die Drehachse 40a des Abtriebszahnrads 20a ist von der Drehachse 52a des Antriebszahnrads 18a radial beabstandet.

Das erste Zahnrad 54a und das zweite Zahnrad 56a sind zumindest im Wesentlichen zwischen der Drehachse 52a des Antriebszahnrads 18a und der Drehachse 40a des Abtriebszahnrads 20a angeordnet. Alternativ könnte zudem ein erstes Zahnrad einer Verbindungseinheit von einem zweiten Zahnrad der Verbindungseinheit aus gesehen hinter einer Drehachse des Antriebszahnrands angeordnet sein. Des Weiteren könnte alternativ ein zweites Zahnrad einer Verbindungseinheit von einem ersten Zahnrad der Verbindungseinheit aus gesehen hinter einer Drehachse des Abtriebszahnrands angeordnet sein.

Die Antriebseinheit 68a umfasst ein Getriebe 88a und einen Motor 90a. Der Motor 90a ist als ein bürstenloser, schnelldrehender Elektromotor ausgebildet. Das Getriebe 88a ist als ein Planetengetriebe ausgebildet. Das Getriebe 88a ist als eine von der Handwerkzeuggetriebeeinheit 10a im Wesentlichen getrennt ausgebildete Baugruppe ausgebildet. Das Getriebe 88a umfasst drei Planetengetriebestufen. Das Getriebe 88a ist dazu vorgesehen, eine Drehzahl des Motors 90a auf eine Drehzahl der Einsatzwerkzeugbefestigung 76a zu reduzieren. Das Antriebszahnrad 18a ist drehfest mit einer Abtriebswelle 92a des Getriebes 88a verbunden. Die Lagerbuchse 86a ist dazu vorgesehen, eine dem Motor 90a abgewandte Seite der Abtriebswelle 92a zu lagern. Das Getriebe 88a weist ein Getriebegehäuse 94a auf, in dem das Antriebszahnrad 18a drehbar gelagert ist. Das Getriebegehäuse 94a ist formschlüssig und/oder kraftschlüssig mit dem Maschinengehäuse 72a und damit mit dem Festgehäuse 12a verbunden.

Die Handwerkzeuggetriebeeinheit 10a weist eine Arretierungseinheit 34a auf. Die Arretierungseinheit 34a umfasst ein Arretierungselement 36a, eine Arretierungsfeder 38a und ein Eingriffmittel 96a. Das Eingriffmittel 96a ist einstückig mit dem Schwenkgehäuse 16a ausgebildet. Das Arretierungselement 36a ist drehfest und verschiebbar in dem Festgehäuse 12a gelagert. Das Arretierungselement 36a ist senkrecht zu der Schwenkachse 14a verschiebbar gelagert. Das Arretierungselement 36a ist an der ersten Seite 26a des Festgehäuses 12a angeordnet. Eine Bewegungsrichtung 98a des Arretierungselements 36a ist parallel zu der Drehachse 52a des Antriebszahnrads 18a. Das Arretierungselement 36a ist dazu vorgesehen, eine drehfeste Verbindung mit dem Eingriffmittel 96a herzustellen. Somit ist das Arretierungselement 36a dazu vorgesehen, das Schwenkgehäuse 16a relativ zu dem Antriebszahnrad 18a in zumindest einer Stellung zu arretieren.

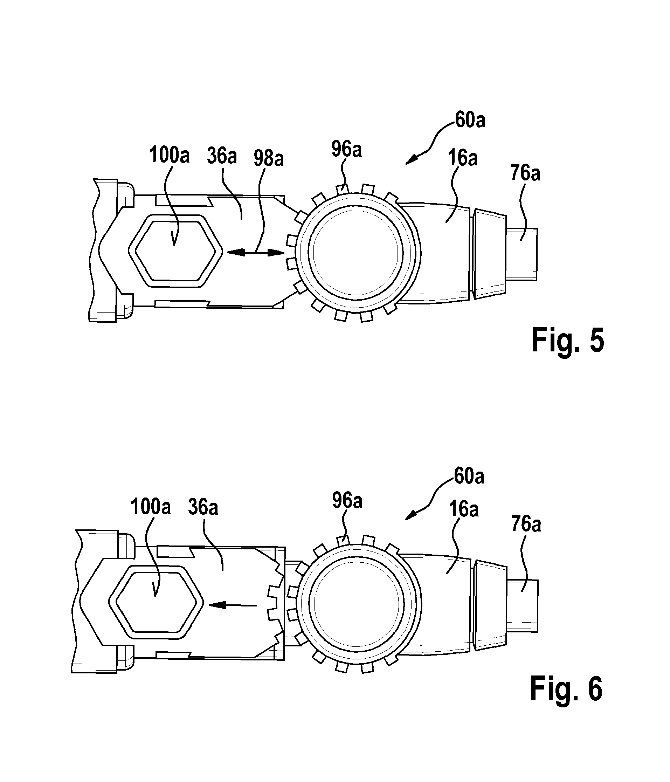

Wie die Figuren 5 und 6 zeigen, weisen das Arretierungselement 36a und das Eingriffmittel 96a jeweils eine Verzahnung auf, wobei die Verzahnungen dazu vorgesehen sind, ineinander zu greifen. Ein Winkel zwischen zwei Zähnen der Verzahnung beträgt 22,5 Grad. Somit ist die Arretierungseinheit 34a dazu vorgesehen, das Schwenkgehäuse 16a in mehreren Stellungen zu arretieren. Hier weisen die Verzahnungen im Wesentlichen rechteckige Zähne auf, wodurch eine besonders präzise Ausrichtung in einer Stellung erreicht werden kann. Alternativ oder zusätzlich könnten die Zähne zumindest einer der Verzahnungen Einführungsschrägen aufweisen, könnten die Zähne verrundet ausgebildet sein und/oder könnte die Verzahnung einen feineren Zahnabstand aufweisen, wodurch die Arretierung schneller hergestellt werden kann. Die Stellungen der Arretierungseinheit 34a sind regelmäßig um die Schwenkachse 14a herum angeordnet. Die Arretierungsfeder 38a drückt das Arretierungselement 36a in Richtung des Eingriffmittels 96a. Somit verrastet die Arretierungseinheit 34a das Schwenkgehäuse 16a und das Festgehäuse 12a selbsttätig. Das Arretierungselement 36a weist eine Betätigungsfläche 100a auf, die dazu vorgesehen ist, von einem Bediener zur Öffnung der Arretierung mit dem Arretierungselement 36a verschoben zu werden. Der Bediener verschiebt das Arretierungselement 36a dabei gegen die Arretierungsfeder 38a.

Das Schwenkgehäuse 16a weist einen Gelenkverschluss 58a auf, der dazu vorgesehen ist, einen Schwenkbereich 60a des Festgehäuses 12a, durch den die die Einsatzwerkzeugbefestigung 76a antreibende Welle aus dem Festgehäuse 12a austritt, in den verschiedenen Stellungen des Schwenkgehäuses 16a abzudecken. Der Gelenkverschluss 58a umschließt die Schwenkachse 14a auf einer senkrecht zu der Schwenkachse 14a ausgerichteten Ebene um mehr als 270 Grad. Hier umschließt der Gelenkverschluss 58a die Schwenkachse 14a auf der Ebene vollständig. Das Eingriffmittel 96a ist an dem Gelenkverschluss 58a angeordnet, und zwar auf einer der Einsatzwerkzeugbefestigung 76a abgewandten Seite des Gelenkverschlusses 58a.

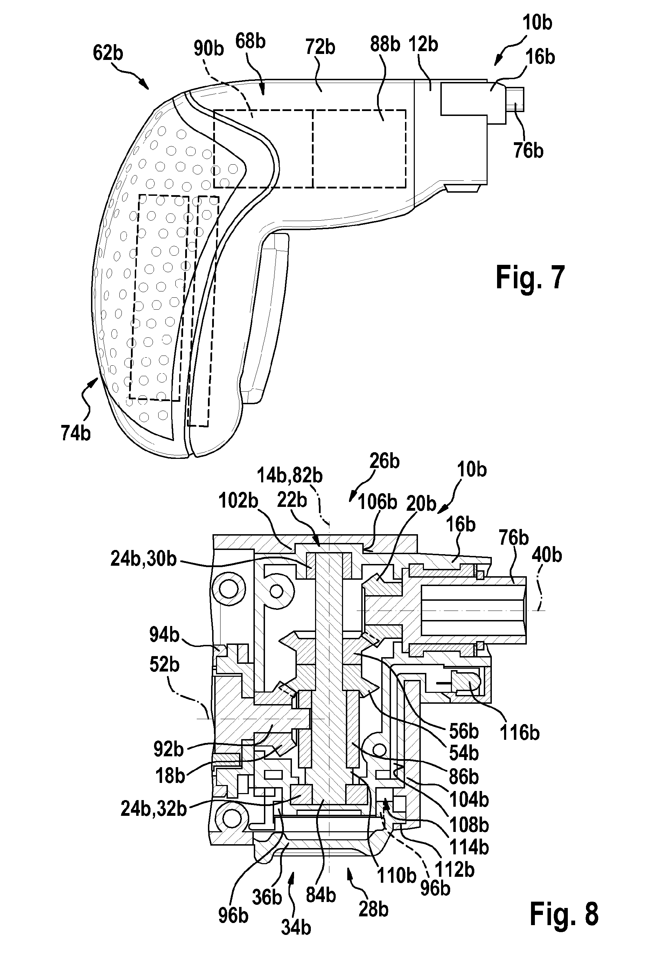

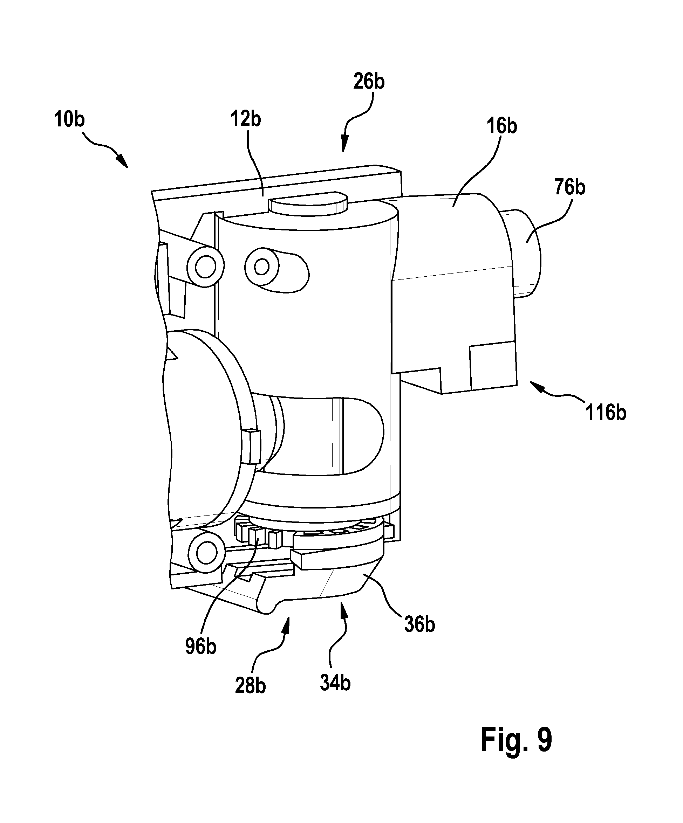

In den Figuren 7 bis 11 sind zwei weitere Ausführungsbeispiele der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispielen der Figuren 7 bis 11 ist der Buchstabe a durch die Buchstaben b oder c ersetzt.

Die Figuren 7 bis 9 zeigen ein Handwerkzeug 62b mit einer erfindungsgemäßen Handwerkzeuggetriebeeinheit 10b, einer Antriebseinheit 68b und einem Maschinengehäuse 72b. Die Handwerkzeuggetriebeeinheit 10b umfasst ein Festgehäuse 12b, ein Schwenkgehäuse 16b, ein Antriebszahnrad 18b, ein Abtriebszahnrad 20b, eine Verbindungseinheit 22b, eine Arretierungseinheit 34b und eine Einsatzwerkzeugbefestigung 76b. Die Einsatzwerkzeugbefestigung 76b ist drehfest mit dem Abtriebszahnrad 20b verbunden. Die Einsatzwerkzeugbefestigung 76b und das Abtriebszahnrad 20b sind drehbar direkt in dem Schwenkgehäuse 16b gelagert. Eine Drehachse 40b des Abtriebszahnrads 20b ist relativ zu dem Schwenkgehäuse 16b unbewegbar.

Die Verbindungseinheit 22b umfasst eine Achse 84b, ein erstes Zahnrad 54b und ein zweites Zahnrad 56b. Die Zahnräder 54b, 56b sind auf die Achse 84b aufgepresst. Die Verbindungseinheit 22b ist dazu vorgesehen, eine Drehbewegung von dem Antriebszahnrad 18b auf das Abtriebszahnrad 20b zu übertragen. Eine Drehachse 82b der Verbindungseinheit 22b ist senkrecht zu der Drehachse 40b des Abtriebszahnrads 20b ausgerichtet. Des Weiteren ist die Drehachse 82b der Verbindungseinheit 22b senkrecht zu einer Drehachse 52b des Antriebszahnrads 18b ausgerichtet.

Das Schwenkgehäuse 16b ist um eine Schwenkachse 14b schwenkbar in dem Festgehäuse 12b gelagert. Das Festgehäuse 12b ist einstückig mit dem Maschinengehäuse 72b des Handwerkzeugs 62b ausgebildet. Das Festgehäuse 12b weist zwei Lagermittel 102b, 104b auf, die dazu vorgesehen sind, das Schwenkgehäuse 16b an zwei entlang der Schwenkachse 14b einander gegenüberliegenden Seiten 26b, 28b schwenkbar zu befestigen. Die zwei Lagermittel 102b, 104b des Festgehäuses 12b sind einstückig mit einem Rest des Festgehäuses 12b ausgebildet, könnten jedoch auch getrennt ausgebildet sein. Hier sind die Lagermittel 102b, 104b als zylinderförmige Vertiefungen ausgebildet. Die Lagermittel 102b, 104b sind an einer dem Schwenkgehäuse 16b zugewandten Innenseite des Festgehäuses 12b angeordnet. Die Lagermittel 102b, 104b wirken direkt auf Lagerflächen 106b, 108b des Schwenkgehäuses 16b. Die Lagerflächen 106b, 108b des Schwenkgehäuses 16b sind zumindest teilzylindermantelförmig ausgebildet.

Eine Lagereinheit 24b der Handwerkzeuggetriebeeinheit 10b weist ein erstes Lagermittel 30b auf, das die Achse 84b der Verbindungseinheit 22b auf einer ersten der Seiten 26b in dem Schwenkgehäuse 16b drehbar lagert. Die Lagereinheit 24b weist ein zweites Lagermittel 32b auf, das die Achse 84b der Verbindungseinheit 22b auf einer zweiten der Seiten 28b, die von der ersten Seite 26b beabstandet ist, ebenfalls in dem Schwenkgehäuse 16b drehbar lagert. Die erste Seite 26b ist einem Haupthandgriff 74b des Maschinengehäuses 72b abgewandt. Die zweite Seite 28b ist dem Haupthandgriff 74b des Maschinengehäuses 72b zugewandt. Die Lagermittel 30b, 32b der Lagereinheit 24b sind als Gleitlager ausgebildet. Das Schwenkgehäuse 16b stützt die Verbindungseinheit 22b auf zumindest einer Seite in axialer Richtung ab. Zusätzlich stützt zumindest eines der Lagermittel 32b die Verbindungseinheit 22b auf zumindest einer Seite in axialer Richtung ab.

Bei einer Montage werden die Verbindungseinheit 22b und das Abtriebszahnrad 20b mit der Einsatzwerkzeugbefestigung 76b in eine Schale des Schwenkgehäuses 16b eingelegt. Durch Verbinden einer anderen Schale des Schwenkgehäuses 16b mit dieser Schale werden die Verbindungseinheit 22b und das Abtriebszahnrad 20b mit der Einsatzwerkzeugbefestigung 76b in dem Schwenkgehäuse 16b zu einer vormontierbaren Baugruppe verbunden.

Die Antriebseinheit 68b umfasst ein Getriebe 88b und einen Motor 90b. Das Antriebszahnrad 18b ist drehfest mit einer Abtriebswelle 92b des Getriebes 88b verbunden. Das Getriebe 88b weist ein Getriebegehäuse 94b auf, in dem das Antriebszahnrad 18b drehbar gelagert ist. Das Getriebegehäuse 94b ist formschlüssig und/oder kraftschlüssig mit dem Maschinengehäuse 72b und damit mit dem Festgehäuse 12b verbunden.

Das Schwenkgehäuse 16b begrenzt eine Öffnung, durch die die Abtriebswelle 92b des Getriebes 88b in das Schwenkgehäuse 16b hineinragt. Zudem begrenzt das Schwenkgehäuse 16b eine Öffnung, durch die die Einsatzwerkzeugbefestigung 76b aus dem Schwenkgehäuse 16b herausragt. Bis auf diese beiden Öffnungen ist das Schwenkgehäuse 16b zumindest im Wesentlichen vollständig geschlossen.

Die Handwerkzeuggetriebeeinheit 10b weist eine Lagerbuchse 86b auf, die dazu vorgesehen ist, eine dem Motor 90b abgewandte Seite der Abtriebswelle 92b zu lagern. Die Lagerbuchse 86b umschließt die Achse 84b der Verbindungseinheit 22b auf einer Ebene. Die Achse 84b befestigt die Lagerbuchse 86b relativ zu der Achse 84b drehbar zumindest in radialer Richtung. Die Lagerbuchse 86b ist zwischen einem axialen Anschlag 110b der Achse 84b und einem der Zahnräder 54b der Verbindungseinheit 22b in axialer Richtung befestigt.

Die Arretierungseinheit 34b weist ein Arretierungselement 36b, eine Arretierungsfeder und ein Eingriffmittel 96b auf. Das Arretierungselement 36b ist drehfest und parallel zu der Schwenkachse 14b verschiebbar in dem Festgehäuse 12b gelagert. Das Arretierungselement 36b ist auf einer dem Abtriebszahnrad 20b abgewandten Seite 28b der Schwenkachse 14b angeordnet. Die Schwenkachse 14b schneidet das Arretierungselement 36b. Das Eingriffmittel 96b ist drehfest mit dem Schwenkgehäuse 16b verbunden. Hier ist das Eingriffmittel 96b einstückig mit dem Schwenkgehäuse 16b ausgebildet. Die nicht näher dargestellte Arretierungsfeder drückt das Arretierungselement 36b gegen einen Anschlag 112b parallel zu der Schwenkachse 14b. Wenn das Arretierungselement 36b an dem Anschlag 112b anliegt, sind eine Verzahnung des Arretierungselements 36b und eine Verzahnung des Eingriffmittels 96b in Eingriff. Das Schwenkgehäuse 16b ist dann relativ zu dem Antriebszahnrad 18b in einer Stellung arretiert.

Das Schwenkgehäuse 16b begrenzt eine Nut 114b, in die die Verzahnung des Arretierungselements 36b von einem Bediener bewegbar ist. Dazu verschiebt der Bediener das Arretierungselement 36b gegen eine Kraft der Arretierungsfeder. Wenn die Verzahnung des Arretierungselements 36b in der Nut 114b angeordnet ist, ist das Schwenkgehäuse 16b relativ zu dem Festgehäuse 12b von dem Bediener schwenkbar. Die Handwerkzeuggetriebeeinheit 10b weist ein mit dem Schwenkgehäuse 16b schwenkbar angeordnetes Beleuchtungsmittel 116b auf.

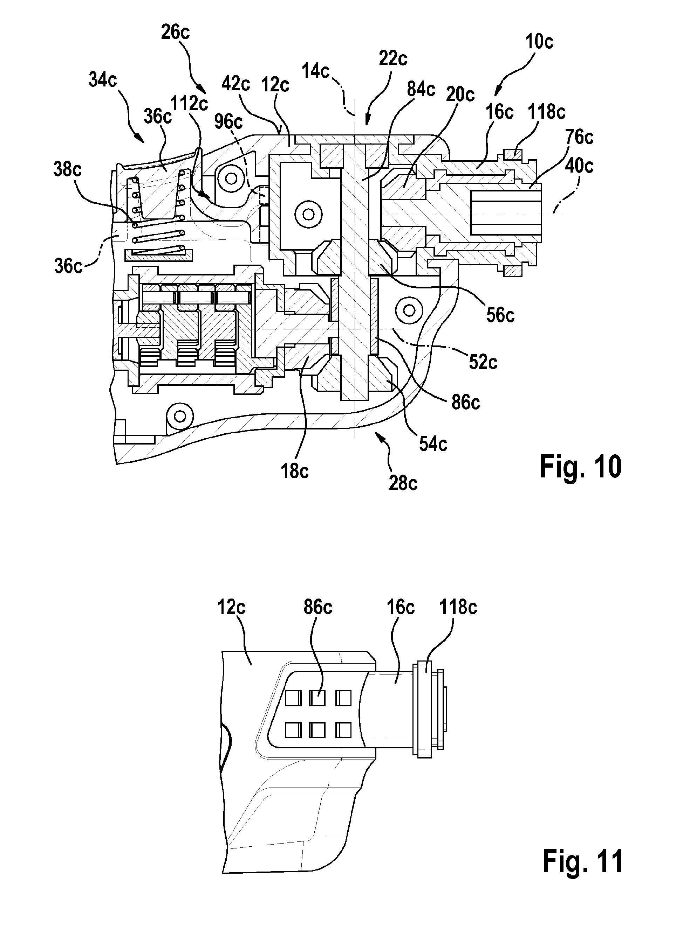

Die Figuren 10 und 11 zeigen eine erfindungsgemäße Handwerkzeuggetriebeeinheit 10c mit einem Festgehäuse 12c, einem Schwenkgehäuse 16c, einem Antriebszahnrad 18c, einem Abtriebszahnrad 20c, einer Verbindungseinheit 22c, einer Arretierungseinheit 34c und einer Einsatzwerkzeugbefestigung 76c. Das Antriebszahnrad 18c weist eine Drehachse 52c auf, die von einer Drehachse 40c des Abtriebszahnrads 20c radial beabstandet ist. Das Schwenkgehäuse 16c ist relativ zu dem Antriebszahnrad 18c und dem Festgehäuse 12c um eine Schwenkachse 14c schwenkbar gelagert. Das Abtriebszahnrad 20c ist in dem Schwenkgehäuse 16c um die Drehachse 40c drehbar gelagert. Das Abtriebszahnrad 20c ist drehfest mit der Einsatzwerkzeugbefestigung 76c verbunden.

Die Verbindungseinheit 22c umfasst eine Achse 84c, ein erstes Zahnrad 54c und ein zweites Zahnrad 56c. Das erste Zahnrad 54c kämmt mit dem Antriebszahnrad 18c, das zweite Zahnrad 56c kämmt mit dem Abtriebszahnrad 20c. Die Zahnräder 54c, 56c sind drehfest mit einander verbunden. Die Zahnräder 54c, 56c sind auf die Achse 84c aufgepresst. Alternativ könnten Zahnräder mit einer Achse und/oder miteinander verzahnt sein. Das erste Zahnrad 54c der Verbindungseinheit 22c ist von dem zweiten Zahnrad 56c der Verbindungseinheit 22c aus gesehen hinter der Drehachse 52c des Antriebszahnrads 18c angeordnet. Das zweite Zahnrad 56c ist zumindest im Wesentlichen zwischen der Drehachse 52c des Antriebszahnrads 18c und der Drehachse 40c des Abtriebszahnrads 20c angeordnet.

Die Achse 84c ist auf einer dem Antriebszahnrad 18c abgewandten ersten Seite 26c in dem Schwenkgehäuse 16c gelagert. Die Achse 84c ist auf einer dem Antriebszahnrad 18c zugewandten zweiten Seite 28c, die von der ersten Seite 26c beabstandet ist, in dem Festgehäuse 12c gelagert. Dazu weist die Handwerkzeuggetriebeeinheit 10c eine Lagerbuchse 86c auf. Die Lagerbuchse 86c ist des Weiteren dazu vorgesehen, das Antriebszahnrad 18c auf einer einem Motor abgewandten Seite zu lagern. Das Festgehäuse 12c befestigt die Lagerbuchse 86c.

Die Arretierungseinheit 34c weist ein Arretierungselement 36c, eine Arretierungsfeder 38c und Eingriffmittel 96c auf. Das Arretierungselement 36c ist relativ zu dem Festgehäuse 12c drehfest und parallel zu der Schwenkachse 14c verschiebbar gelagert. Das Arretierungselement 36c ist von der dem Antriebszahnrad 18c abgewandten ersten Seite 26c der Schwenkachse 14c bedienbar angeordnet. Das Arretierungselement 36c ist in einer Stellung dargestellt, in der es das Schwenkgehäuse 16c drehfest befestigt, und in einer weiteren Stellung gestrichelt dargestellt, in der das Schwenkgehäuse 16c von einem Bediener drehbar ist. Die Eingriffmittel 96c sind drehfest mit dem Schwenkgehäuse 16c verbunden. Hier sind die Eingriffmittel 96c einstückig mit dem Schwenkgehäuse 16c ausgebildet.

Die Arretierungsfeder 38c drückt das Arretierungselement 36c parallel zu der Schwenkachse 14c gegen einen Anschlag 112c. Wenn das Arretierungselement 36c an dem Anschlag 112c anliegt, sind eine Verzahnung des Arretierungselements 36c und eine Verzahnung der Eingriffmittels 96c in Eingriff. Das Schwenkgehäuse 16c ist relativ zu dem Antriebszahnrad 18c in einer Stellung arretiert.

Die Eingriffmittel 96c sind jeweils als zumindest zwei quaderförmige Anformungen des Schwenkgehäuses 16c ausgebildet. Die zwei Anformungen sind in Richtung der Schwenkachse 14c um einen Abstand voneinander beabstandet angeordnet. Die Verzahnung des Arretierungselements 36c weist ebenfalls zwei um den Abstand voneinander beabstandete Anformungen des Arretierungselements 36c auf. Wenn das Arretierungselement 36c betätigt ist, liegt eine der Anformungen des Arretierungselements 36c zwischen den zwei Anformungen der Eingriffmittel 96c. Durch die Aufteilung der Eingriffmittel 96c in jeweils zwei Anformungen kann eine besonders stabile Verzahnung bei einem vorteilhaft kurzen Betätigungsweg des Arretierungselements 36c erreicht werden.

Wenn der Bediener das Arretierungselement 36c gegen eine Kraft der Arretierungsfeder 38c verschiebt, wird der Eingriff zwischen der Verzahnung des Arretierungselements 36c und der Verzahnung der Eingriffmittel 96c gelöst. Dann ist das Schwenkgehäuse 16c relativ zu dem Festgehäuse 12c von dem Bediener schwenkbar.

Das Schwenkgehäuse 16c weist zwei miteinander verbundene Gehäuseschalen auf, die entlang der in Figur 10 dargestellten Schnittebene voneinander getrennt sind. Die zwei Gehäuseschalen sind auf einer der Einsatzwerkzeugbefestigung 76c abgewandten Seite miteinander verschraubt. Auf einer der Einsatzwerkzeugbefestigung 76c zugewandten Seite sind die Gehäuseschalen durch einen Verbindungsring 118c, der auf das Schwenkgehäuse 16c aufgepresst ist, miteinander verbunden.

## Patentansprüche

1. Handwerkzeuggetriebeeinheit mit einem Festgehäuse (12a-c), mit einem relativ zu dem Festgehäuse (12a-c) um eine Schwenkachse (14a-c) schwenkbar gelagerten Schwenkgehäuse (16a-c), mit einem Antriebszahnrad (18a-c) und mit einem in dem Schwenkgehäuse (16a-c) gelagerten Abtriebszahnrad (20 a-c), **gekennzeichnet durch** eine Verbindungseinheit (22a-c), die eine Drehbewegung von dem Antriebszahnrad (18a-c) auf das Abtriebszahnrad (20a-c) überträgt.

2. Handwerkzeuggetriebeeinheit nach Anspruch 1, **gekennzeichnet durch** zumindest eine Lagereinheit (24a-c), die dazu vorgesehen ist, die Verbindungseinheit (22a-c) auf zumindest einer Seite (26a-c, 28b) nur in dem Schwenkgehäuse (16a-c) drehbar zu lagern.

3. Handwerkzeuggetriebeeinheit nach Anspruch 1 oder 2, **dadurch gekennzeichnet, dass** das Schwenkgehäuse (16b) dazu vorgesehen ist, die Verbindungseinheit (22b) und das Abtriebszahnrad (20b) zu einer vormontierbaren Baugruppe zu verbinden.

4. Handwerkzeuggetriebeeinheit zumindest nach Anspruch 2, **dadurch gekennzeichnet, dass** die Lagereinheit (24b) zwei Lagermittel (30b, 32b) aufweist, die die Verbindungseinheit (22b) an zwei entlang der Schwenkachse (14b) einander gegenüberliegenden Seiten (26b, 28b) in dem Schwenkgehäuse (16b) drehbar lagern.

5. Handwerkzeuggetriebeeinheit zumindest nach Anspruch 2, **dadurch gekennzeichnet, dass** die Lagereinheit (24a; 24c) zwei Lagermittel (30a, 32a; 30c, 32c) aufweist, die die Verbindungseinheit (22a; 22c) an einer Seite (26a; 26c) in dem Schwenkgehäuse (16a; 16c) und an einer Seite (28a; 28c) in dem Festgehäuse (12a; 12c) drehbar lagern.

6. Handwerkzeuggetriebeeinheit nach einem der vorhergehenden Ansprüche, **gekennzeichnet durch** eine Arretierungseinheit (34a-c) mit einem Arretierungselement (36a-c), das dazu vorgesehen ist, das Schwenkgehäuse (16a-c) relativ zu dem Antriebszahnrad (18a-c) in zumindest einer Stellung zu arretieren.

7. Handwerkzeuggetriebeeinheit nach Anspruch 6, **dadurch gekennzeichnet, dass** die Arretierungseinheit (34a-c) dazu vorgesehen ist, das Schwenkgehäuse (16a-c) in mehreren Stellungen zu arretieren.

8. Handwerkzeuggetriebeeinheit nach Anspruch 7, **dadurch gekennzeichnet, dass** die Stellungen regelmäßig um die Schwenkachse (14a-c) angeordnet sind.

9. Handwerkzeuggetriebeeinheit zumindest nach Anspruch 6, **dadurch gekennzeichnet, dass** das Arretierungselement (36a-c) in zumindest einem Betriebszustand einen Formschluss mit dem Schwenkgehäuse (16a-c) herstellt.

10. Handwerkzeuggetriebeeinheit zumindest nach Anspruch 6, **dadurch gekennzeichnet, dass** die Arretierungseinheit (34a-c) eine Arretierungsfeder (38a; 38c) aufweist, die in zumindest einem Betriebszustand auf das Arretierungselement (36a-c) drückt.

11. Handwerkzeuggetriebeeinheit zumindest nach Anspruch 6, **dadurch gekennzeichnet, dass** das Arretierungselement (36a) im Wesentlichen senkrecht zu der Schwenkachse (14a) verschiebbar gelagert ist.

12. Handwerkzeuggetriebeeinheit nach einem der vorhergehenden Ansprüche, **dadurch gekennzeichnet, dass** das Festgehäuse 12a-c, eine zumindest im Wesentlichen parallel zu einer Drehachse (40a-c) des Abtriebszahnrads (20a-c) ausgerichtete Außenseite (42a-c) umfasst, die von der Drehachse (40a-c) des Abtriebszahnrads (20a-c) weniger als 12 mm beabstandet ist.

13. Handwerkzeuggetriebeeinheit nach Anspruch 12, **dadurch gekennzeichnet, dass** das Arretierungselement (36b) auf einer der Außenseite (42b) gegenüberliegenden Seite (28b) angeordnet ist.

14. Handwerkzeuggetriebeeinheit zumindest nach Anspruch 6, **dadurch gekennzeichnet, dass** das Arretierungselement (36b; 36c) im Wesentlichen parallel zu der Schwenkachse (14b; 14c) verschiebbar gelagert ist.

15. Handwerkzeuggetriebeeinheit nach einem der vorhergehenden Ansprüche, **gekennzeichnet durch** zwei Befestigungsmittel (44a-c, 46a-c), die dazu vorgesehen sind, das Schwenkgehäuse (16a-c) an zwei entlang der Schwenkachse (14a-c) einander gegenüberliegenden Seiten (26a-c) schwenkbar zu befestigen.

16. Handwerkzeuggetriebeeinheit nach Anspruch 15, **dadurch gekennzeichnet, dass** die Befestigungsmittel (44a, 46a; 44c, 46c) jeweils dazu vorgesehen sind, Kräfte zumindest in zwei gegensätzliche Richtungen (48a, 50a; 48c, 50c) parallel zu der Schwenkachse (14a; 14c) auf das Schwenkgehäuse (16a; 16c) zu bewirken.

17. Handwerkzeuggetriebeeinheit zumindest nach Anspruch 15, **dadurch gekennzeichnet, dass** die Befestigungsmittel (44a, 46a; 44c, 46c) das Schwenkgehäuse (16a; 16c) jeweils formschlüssig parallel zu der Schwenkachse (14a; 14c) befestigen.

18. Handwerkzeuggetriebeeinheit zumindest nach Anspruch 15, **dadurch gekennzeichnet, dass** die Befestigungsmittel 44a, 46a; 44c, 46c) als Teil einer Nut-Feder-Verbindung ausgebildet sind.

19. Handwerkzeuggetriebeeinheit nach einem der vorhergehenden Ansprüche, **dadurch gekennzeichnet, dass** das Antriebszahnrad (18a-c) eine von einer Drehachse (40a-c) des Abtriebszahnrads (20a-c) radial beabstandete Drehachse (52a-c) aufweist.

20. Handwerkzeuggetriebeeinheit nach einem der vorhergehenden Ansprüche, **dadurch gekennzeichnet, dass** die Verbindungseinheit (22a-c) dazu vorgesehen ist, eine Drehbewegung von dem Antriebszahnrad (18a-c) auf das Abtriebszahnrad (20a-c) zumindest im Wesentlichen übersetzungsfrei zu übertragen.

21. Handwerkzeuggetriebeeinheit nach einem der vorhergehenden Ansprüche, **dadurch gekennzeichnet, dass** die Verbindungseinheit (22a-c) zwei voneinander getrennt angeordnete Zahnräder (54a-c, 56a-c) aufweist

22. Handwerkzeuggetriebeeinheit nach einem der vorhergehenden Ansprüche, **gekennzeichnet durch** einen Gelenkverschluss (58a-c), der dazu vorgesehen ist, einen Schwenkbereich (60a-c) zumindest teilweise zu verschließen.

23. Handwerkzeuggetriebeeinheit nach Anspruch 22, **dadurch gekennzeichnet, dass** der Gelenkverschluss (58a-c) die Schwenkachse (14a-c) auf zumindest einer Ebene umschließt.

24. Handwerkzeug mit einer Handwerkzeuggetriebeeinheit (10a-c) nach einem der vorhergehenden Ansprüche.
